# EUROPEAN PATENT APPLICATION

(11) **EP 2 931 013 A1**
(43) Date of publication of application: **14.10.2015**
(21) Application number: 13859833.9
(22) Date of filing: 19.07.2013
(51) Int. Cl.: H05K 7/20

(54) **HEAT RADIATION APPARATUS OF TERMINAL**

(30) Priority: 07.12.2012 CN 201220669214 U
(71) Applicant: ZTE Corporation, Shenzhen, Guangdong 518057 (CN)
(72) Inventor: MA, Yangfeng, Shenzhen Guangdong 518057 (CN)
(74) Representative: Novagraaf Technologies
(86) International application number: PCT/CN2013/079724
(87) International publication number: WO 2014/086152

(57) **Abstract**

The present invention provides a heat radiation apparatus of a terminal, the apparatus includes an air channel (6) and a directional heat conductive strip (5), the air channel (6) passes through a CPU (2), a heat sink is disposed between the CPU (2) and a rear cover, one end of the directional heat conductive strip (5) is connected to the heat sink, and the other end of the directional heat conductive strip (5) is connected to a heat radiation device. In the apparatus, an air channel is disposed on a CPU, internal heat of a terminal is released by means of the convection of the air channel; and a heat sink is disposed between the CPU and a rear cover and connected to a directional heat conductive strip, so that heat is transmitted to a heat radiation device of the terminal by means of the directional heat conductive strip, and then heat is radiated by means of the heater radiation device. The apparatus has a simple structure, and can ensure the stability of a terminal circuit on the basis of ensuring the user experience.

## Description

### Technical Field

The present invention relates to the field of communication technologies, and in particular to a heat radiation apparatus of a terminal.

### Background

The dissipation of the heat generated by a current terminal processing circuit mainly has two ways: one way is using a metal material structure shell to take out the heat, and the other way is using a heat insulation shell to wrap the heat in the terminal so as to emit the heat slowly. The first way is good for the stability of the circuit but is poor in user experience; the second way takes the user experience as the highest demand but at the expense of the stability of the circuit. So how to further improve the user experience on the basis of guaranteeing the stability of the terminal circuit becomes an urgent problem to be solved.

### Summary

In view of the above analysis, the present invention aims to provide a heat radiation apparatus of a terminal, which is used to improve the stability of a terminal circuit on the basis of ensuring the user experience.

Embodiments of the present invention are implemented by using the following technical solutions:
A heat radiation apparatus of a terminal, the apparatus includes an air channel and a directional heat conductive strip;
the air channel passes through the CPU of the terminal, and a heat sink is disposed between the CPU and a rear cover of the terminal;
one end of the directional heat conductive strip is connected with the heat sink, and the other end of the directional heat conductive strip is connected with a heat radiation device.

Preferably, the size of the heat sink is larger than or equal to the size of the CPU.

Preferably, one or more heat radiation holes are arranged at the connection position of the air channel and an outer cover of the terminal.

Preferably, the air channel is in a shape of ⊐, ⊏, ┐, Γ, L or J, and the air channel is arranged at the periphery of a battery of the terminal.

Preferably, the air channel is in a linear shape, and the air channel is arranged on one side or two sides of the battery of the terminal.

Preferably, the heat radiation device is arranged inside the air channel.

Preferably, the heat radiation device includes one or more of an antenna, an audio cavity and an earphone.

The present unity model has the following technical advantages:
The present invention provides a heat radiation apparatus of a terminal, in the apparatus, an air channel is disposed on the CPU of the terminal, so the internal heat of the terminal is released by means of the convection of the air channel; and a heat sink is disposed between the CPU and the rear cover of the terminal, and the heat sink is connected with a directional heat conductive strip, so that heat is transmitted to a heat radiation device of the terminal by means of the directional heat conductive strip, and then heat is radiated by means of the heater radiation device. The apparatus has a simple structure, which can ensure the stability of a terminal circuit as well as the user experience.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of the Drawings

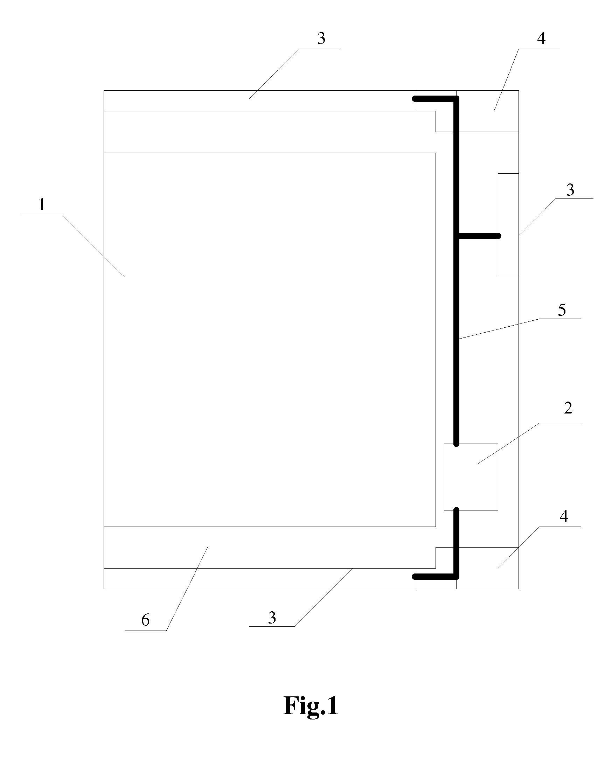

Fig. 1 is a schematic diagram of a heat radiation apparatus of a terminal according to an embodiment of the present invention.

### Detailed Description of the Embodiments

The preferred embodiments of the present invention are described below with reference to the accompanying drawings in detail, in which the accompanying drawings constitute a part of the present application and combine with the embodiments of the present invention together for explaining the principle of the present invention.

The embodiments of the present invention provide a heat radiation apparatus of a terminal, see Fig. 1, the apparatus includes:
an air channel 6 arranged on a CPU 2, the air channel 6 is in a shape of ⊐, ⊏, ┐, Γ, L or J, the air channel 6 surrounds at the periphery of a battery 1 of the terminal, or the air channel 6 is in a lineal shape, and the air channel 6 is vertically arranged on one side or two sides of a battery 1 of the terminal. As shown in Fig. 1, since hot air rises upwards, furthermore, cold air entering a horizontal air channel on the lower side further promotes the movement of the hot air, so that the heat inside the terminal flows out from a horizontal air channel on the upper side with the air.

A heat sink is disposed between the CPU 2 and the rear cover of the terminal, and the size of the heat sink is larger than or equal to the size of the CPU 2. The heat sink is connected with one end of the directional heat conductive strip 5, and the other end of the directional heat conductive strip 5 is connected to a heat radiation device. The heat radiation device includes one or more of an antenna 3, an audio cavity 4 and an earphone. The heat generated by the CPU2 is conducted to the directional heat conductive strip 5 by the heat sink, and the directional heat conductive strip 5 has the function of transmitting the heat from one end to the other end; therefore, the heat on the heat sink is transmitted to the heat radiation device through the directional heat conductive strip 5, and the heat is released by the heat radiation device.

One or more heat radiation holes are arranged at the connection position of the air channel 6 and the outer cover of the terminal, the heat radiation hole being used for forming convection to the air channel 6 so as to radiate the heat inside the terminal.

In conclusion, the present invention provides a heat radiation apparatus of a terminal, in the apparatus, an air channel is disposed on the CPU, so that the internal heat of a terminal is released by means of the convection of the air channel; and a heat sink is disposed between the CPU and a rear cover and connected to a directional heat conductive strip, so that heat is transmitted to a heat radiation device of the terminal by means of the directional heat conductive strip, and then heat is radiated by means of the heater radiation device. The apparatus has a simple structure, and can guarantee the stability of a terminal circuit on the basis of ensuring the user experience.

The foregoing descriptions are merely exemplary implementation manners of the present invention, but the protection scope of the present invention is not limited here. Any variation or replacement that may be easily thought of by persons skilled in the art without departing from the technical scope disclosed in the present invention shall fall within the protection scope of the present invention. Therefore, the protection scope of the present invention shall be subject to the protection scope of the claims.

## Claims

1. A heat radiation apparatus of a terminal, **characterized by** comprising: an air channel (6) and a directional heat conductive strip (5);
the air channel (6) passes through a CPU (2), and a heat sink is disposed between the CPU (2) and a rear cover of the terminal;
one end of the directional heat conductive strip (5) is connected with the heat sink, and the other end of the directional heat conductive strip (5) is connected with a heat radiation device.

2. The apparatus according to claim 1, **characterized in that** the size of the heat sink is larger than or equal to the size of the CPU (2).

3. The apparatus according to claim 1 or 2, **characterized in that** one or more heat radiation holes are provided at the connection position of the air channel (6) and an outer cover of the terminal.

4. The apparatus according to claim 1 or 2, **characterized in that** the air channel (6) is in a shape of ⊐, ⊏, ┐, Γ, L or J, and the air channel (6) is arranged at the periphery of a battery (1) of the terminal.

5. The apparatus according to claim 1 or 2, **characterized in that** the air channel (6) is in a linear shape, and the air channel (6) is arranged on one side or two sides of the battery (1) of the terminal.

6. The apparatus according to claim 1 or 2, **characterized in that** the heat radiation device is arranged inside the air channel (6).

7. The apparatus according to claim 1 or 6, **characterized in that** the heat radiation device comprises one or more of an antenna (3), an audio cavity (4) and an earphone.
